(19) Europäisches Patentamt European Patent Office Office européen des brevets

(11) **EP 4 363 900 B1**

(12) **EUROPEAN PATENT SPECIFICATION**

(45) Date of publication and mention
of the grant of the patent:
**01.04.2026 Bulletin 2026/14**

(21) Application number: **22747091.1**

(22) Date of filing: **28.06.2022**

(51) International Patent Classification (IPC):
*G01S 17/88* (2006.01)        *G01S 13/88* (2006.01)
*G01V 5/00* (2024.01)        *B65D 88/12* (2006.01)
*G01N 23/02* (2006.01)

(52) Cooperative Patent Classification (CPC):
**G01S 17/88; G01N 23/04; G01S 13/88; G01V 5/20**

(86) International application number:
**PCT/GB2022/051646**

(87) International publication number:
**WO 2023/275524 (05.01.2023 Gazette 2023/01)**

(54) **INSPECTION OF CARGO IN OPEN-TOPPED VEHICLE**

INSPEKTION VON FRACHT IN OBEN OFFENEN FAHRZEUGEN

INSPECTION DE CARGAISON DANS UN VÉHICULE À TOIT OUVERT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.07.2021 GB 202109552**

(43) Date of publication of application:
**08.05.2024 Bulletin 2024/19**

(73) Proprietor: **Smiths Detection France S.A.S.**
**94400 Vitry-sur-Seine (FR)**

(72) Inventor: **MAITREJEAN, Serge**
**94400 Vitry-sur-Seine (FR)**

(74) Representative: **Vienne, Aymeric Charles Emile et
al**
**Mathys & Squire**
**The Shard**
**32 London Bridge Street**
**London SE1 9SG (GB)**

(56) References cited:
WO-A1-2019/216833        AU-A1- 2013 237 637
CN-A- 111 336 917        US-A1- 2006 145 079
US-A1- 2017 357 026

## Description

### FIELD OF INVENTION

The invention relates to inspection of cargo in an open-topped vehicle, such as an open-topped gondola-type wagon or an open-topped truck trailer.

### BACKGROUND OF INVENTION

It is sometimes difficult to inspect high-density cargo or high-thickness cargo using conventional X-rays scanners, because the high-density or high-thickness cargo absorbs most of the X-rays. Therefore in some cases high-density cargo is too dense or thick to be accurately imaged by conventional X-rays scanners.

A known solution is to manually inspect the cargo, which is time-consuming.

AU 2013 237 637 discloses a train wagon 3D profiler. CN 111 336 917 discloses a technique for volume measurement. US 2006/145079 discloses a technique for density detection. US 2017/357026 discloses integration of inspection scanner to cargo container processing system. WO 2019/216833 discloses detection of illegal hiding place in iron ore load.

### SUMMARY OF INVENTION

Aspects of the invention are recited in the independent claims and preferred features are recited in the dependent claims.

These and other aspects and embodiments of the invention are also described by reference to the following description and appended drawings.

### PRESENTATION OF DRAWINGS

Figure 1 schematically represents an example method according to the disclosure;
Figure 2 schematically represents an example system according to the disclosure;
Figures 3A and 3B schematically represent a cross-section of an example open-topped vehicle comprising cargo, according to the disclosure,

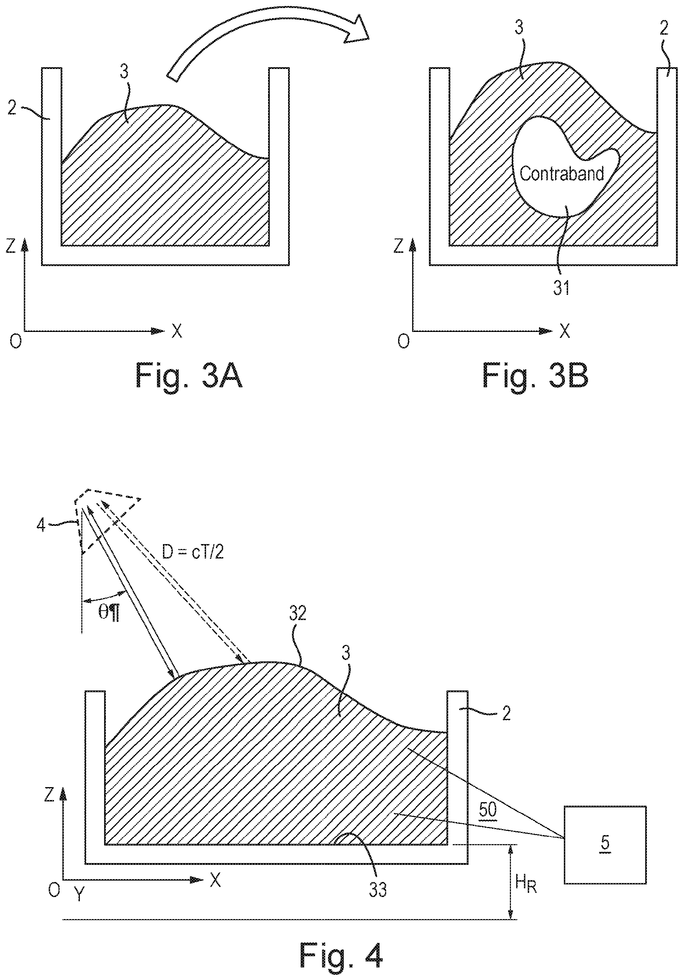

Figure 3A schematically representing the cargo not comprising an object of interest, and
Figure 3B schematically representing the cargo comprising an object of interest, such as contraband;

Figure 4 schematically represents a cross-section of an example top-observation device configured to observe a top surface of the cargo in the open-topped vehicle, according to the disclosure,

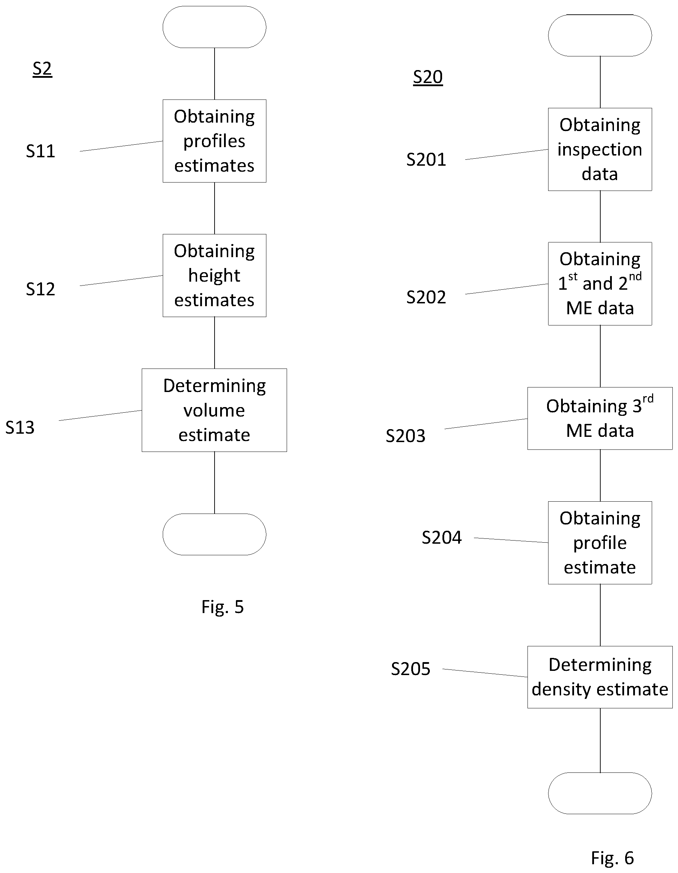

Figure 5 schematically represents an example method according to the disclosure;
Figure 6 schematically represents an example method according to the disclosure;

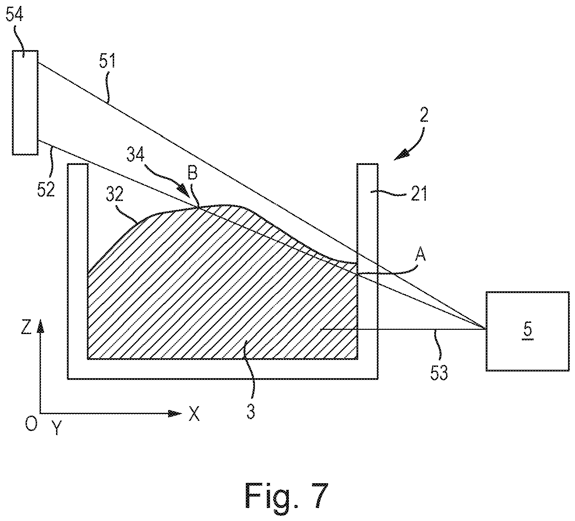

Figure 7 schematically represents a cross-section of an example side-inspection device configured to inspect the cargo in the open-topped vehicle, according to the disclosure, and

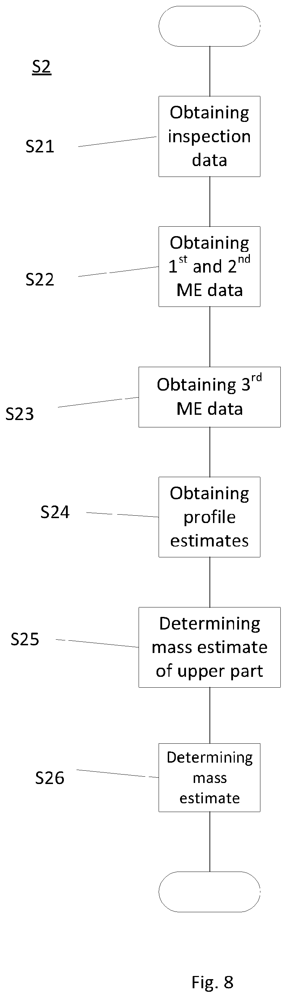

Figure 8 schematically represents an example method according to the disclosure.

### DESCRIPTION OF EXAMPLE EMBODIMENTS

#### Overview

The disclosure describes example techniques for inspection of cargo in an open-topped vehicle, such as an open-topped gondola-type wagon or an open-topped truck trailer.

The cargo may be any type of homogeneous cargo, such as a high-density or a high-thickness cargo as non-limiting examples. Some non-limiting types of high-thickness cargo include cargo with a thickness in $g/cm^2$ which exceeds 300 $g/cm^2$, with a density in $g/cm^3$ which is greater than 2 $g/cm^3$, such as metal ore (e.g. iron ore, copper ore) as non-limiting examples.

The disclosed example techniques may enable detection of objects of interest hidden in the cargo. Usual objects of interest (such as contraband products like cigarettes, drugs, etc.) have a much lower density (e.g. volumic mass) than high-density or high-thickness homogeneous cargo, especially metal ore. If an object of interest is hidden in such a high-density or high-thickness homogeneous cargo, the volume of the cargo which is apparent from the open-topped vehicle will be greater than that of the cargo without the object of interest.

The disclosure may be applied to any type of open-topped vehicle, where a top surface of the cargo located in the open-topped vehicle may be observed by a top-observation device during a mutual movement of the open-topped vehicle and the top-observation device.

According to the invention, observation data of the top surface, obtained from the top-observation device, an estimation of the volume of the cargo is made. Using the volume estimation, an estimation of the mass of the cargo is made. The mass estimate may be compared to a reference mass $M_{ref}$ of the cargo, such as a mass which has been previously declared e.g. to border officials. If the estimated mass is greater than the mass of the cargo without the object of interest, it means that the apparent volume of the cargo is not coherent with the mass of the cargo without the object of interest, and an object of interest is thus likely to be hidden in the cargo.

Similarly, alternatively or additionally, an estimation of a reference volume of the cargo may be made by dividing the reference mass $M_{ref}$ of the cargo by a density of the cargo (the density being either determined or known). The estimation of the reference volume of the cargo may be compared to the volume estimation obtained using the observation data of the top surface. If the estimation of the volume is greater than the refence volume, that is to say greater than the volume of the cargo without the object of interest, it means that the apparent volume of the cargo is not coherent with the mass of the cargo without the object of interest, and an object of interest is thus likely to be hidden in the cargo.

Detailed description

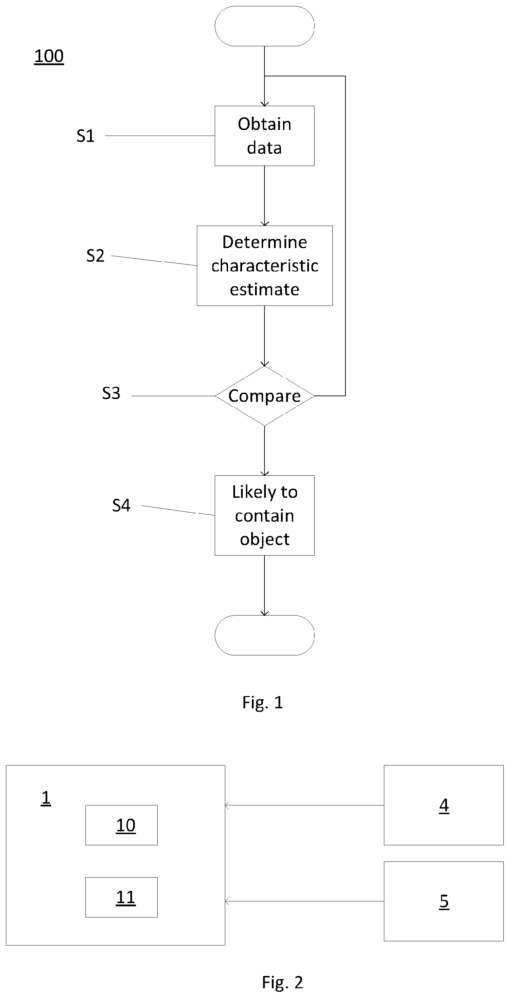

Figure 1 schematically represents an example method 100 according to the disclosure.

The method 100 is implemented by a computer. As illustrated in Figure 2, the computer is part of a system 1 comprising a processor 10, and a memory 11 storing instructions which, when executed by the processor 10, enable the system 1 to perform e.g. the method 100.

Referring back to Figure 1, the method 100 is directed to inspecting cargo in an open-topped vehicle.

Figures 3A and 3B schematically represent a cross-section of an example open-topped vehicle 2 comprising cargo 3. Figure 3A schematically represents the cargo 3 not comprising an object of interest. Figure 3B schematically represents the cargo 3 comprising an object 31 of interest, such as contraband as a non-limiting example. If the object 31 of interest hidden in the cargo 3 has a lower density (e.g. volumic mass) than the cargo 3, the volume of the cargo 3 which is apparent from the open-topped vehicle 2 will be greater (Figure 3B) than that of the cargo without the object of interest (Figure 3A).

In some examples, the cargo 3 in the open-topped vehicle 2 comprises a load of material, such as a high-density or a high-thickness material as non-limiting examples. In some examples the high-density or high-thickness material of the load may be too dense or too thick for proper transmission of ionising radiation, and the full cargo 3 (and the object 31 of interest when present) may not be accurately imaged by conventional ionising radiation scanners.

In some examples, the high-density or high-thickness material may comprise metal ore, such as an iron ore - but other examples of high-density or high-thickness materials may be envisaged.

The object 31 of interest may comprise at least one of contraband, such as cigarettes or drugs, and weapon, such as explosives. Other examples are envisaged.

The open-topped vehicle 2 may comprise at least one of an open-topped gondola-type wagon or an open-topped truck trailer, as non-limiting examples. It should be understood that the method 100 may apply to any type of container containing cargo, the container being with an open top.

The method 100 of Figure 1 is not according to the invention and is present for illustration purposes only. The method 100 of Figure 1 mainly comprises obtaining, at S1, data from a top-observation device.

Figure 4 schematically represents a cross-section of an example top-observation device 4 configured to observe a top surface 32 of the cargo 3 in the open-topped vehicle 2. The top-observation device 4 of Figure 4 is configured to observe the top surface 32 of the cargo in the open-topped vehicle 2 during a mutual movement of the open-topped vehicle 2 and the top-observation device 4, e.g. in the (OY) direction of Figure 4. During the mutual movement, the top-observation device 4 may be mounted fixed with respect to the ground, the open-topped vehicle 2 being mobile with respect to the ground, e.g. in the (OY) direction. Alternatively, during the mutual movement, the open-topped vehicle 2 may be fixed with respect to the ground, and the top-observation device 4 may be mobile with respect to the ground.

The method 100 of Figure 1 may further comprise determining, at S2, an estimate of a characteristic of the cargo in the open-topped vehicle, based on the data obtained at S1. As explained in greater detail below, the characteristic of the cargo which may be estimated may comprise at least one of a volume of the cargo, a density of the cargo, and a mass of the cargo, as non-limiting examples.

The method 100 of Figure 1 may further comprise comparing, at S3, the characteristic estimate determined at S2 with a reference characteristic associated with the cargo in the open-topped vehicle. In Figure 1, step S3 may further comprise determining whether the cargo in the open-topped vehicle is in conformity with the reference characteristic, based on the comparing.

In the example of Figure 1, in the method 100 comparing at S3 the characteristic estimate (such as the mass estimate or the volume estimate) determined at S2 with the reference characteristic (such as the reference mass or the reference volume, respectively) may comprise comparing the determined characteristic estimate with a predetermined threshold above the reference characteristic. If it is determined at S3 that the determined characteristic estimate is greater than the predetermined threshold above the reference characteristic, the method 100 further comprises determining at S3 that the cargo in the open-topped vehicle is not in conformity with the reference characteristic. The method 100 proceeds to S4.

In the example of Figure 1, the method 100 comprises determining, at S4, that the cargo in the open-topped vehicle is likely to contain an object of interest.

If it is determined at S3 that the cargo in the open-topped vehicle is in conformity with the reference characteristic, the method 100 proceeds to S1 where a new open-topped vehicle may be inspected.

As illustrated in Figure 2, the top-observation device 4 is in communication with the system 1, e.g. using wired or wireless connection. Obtaining at S1 the data may comprise the system 1 receiving the data from the top-observation device 4. In that example, determining at S2 the estimate of the characteristic of the cargo in the open-topped vehicle may comprise determining the estimate of the volume of the cargo in the open-topped vehicle, which may comprise the system 1 determining the volume estimate using the data received from the top-observation device 4.

Alternatively or additionally, obtaining at S1 the data may comprise a processor (not shown in the Figures) of the top-observation device 4 receiving the data. In that example, determining at S2 the estimate of the characteristic of the cargo in the open-topped vehicle may comprise determining the estimate of the volume of the cargo, which may comprise the system 1 receiving the volume estimate from the top-observation device 4. In other words, the top-observation device 4 may be configured to determine the volume estimate using the top-observation data.

As illustrated in Figure 5, according to the invention, determining at S2 the volume estimate comprises

obtaining, at S11, estimates of profiles of the top surface of the cargo in the open-topped vehicle, based on the data obtained from the top-observation device;
obtaining, at S12, an estimate of a height of the cargo under the top surface of the cargo in the open-topped vehicle;
determining, at S13, the volume estimate, based on the obtained profile estimates and the obtained height estimate.

An example for obtaining, at S11, the estimates of the profiles of the top surface of the cargo in the open-topped vehicle, based on the data obtained from the top-observation device, is described below.

In some examples, the top-observation device 4 may comprise one or more Lidar (Light Detection and Ranging) scanners.

As illustrated in Figure 4, the Lidar 4 may conventionally comprise a pulsed laser for scanning the surrounding space including the top surface 32, with a varying angle $\theta$. For each angular position $\theta$, a time measurement T (corresponding to a *"time of flight"*) is captured between emission of the laser pulse by the Lidar 4 and reception by the Lidar 4 of the laser pulse reflected by the top surface 32. The captured time measurement T allows, by multiplication by the speed c of light and by division by 2 (outward and return flights of the pulse), to obtain a distance D between the top surface 32 and the top-observation device 4, at the angle $\theta$. It is possible to locate a point of the top surface 32 in the (XOZ) plane of Figure 4 by knowing the angle $\theta$ and the corresponding distance D. For a given mutual position of the vehicle 2 and the Lidar 4 along the axis (OY), by knowing a series of angles $\theta$ and a series of corresponding distances D, it is possible to obtain an estimate of a profile of the top surface 32 of the cargo. A series of estimates of profiles of the top surface 32 of the cargo in the open-topped vehicle may be obtained for a series of mutual positions along the axis (OY) during the mutual movement of the open-topped vehicle 2 and the top-observation device 4, in the (OY) direction.

Non-limiting examples of methods to determine one or more mutual positions of the vehicle and the top-observation device along an axis of the mutual movement of the open-topped vehicle and the top-observation device (e.g. along the axis (OY of Figure 4) are described below.

A first example method may use data output from a speed sensor. The speed sensor may be configured to measure the mutual speed of the vehicle and the top-observation device. The speed measurements are updated periodically. The speed measurements are also time stamped. The output data may thus comprise information couples $(v(t_1),t_1)$, $(v(t_2),t_2)$, etc., where v is the mutual speed and $t_1$, $t_2$ are time stamps. In parallel, the top-observation device is configured to output data in the format $(x(t'_1), z(t'_1),t'_1)$, $(x(t'_2), z(t'_2),t'_2)$, etc., where x and z are the positions of a point of the top surface in the (XOZ) plane and $t'_1$, $t'_2$ are also time stamps, not necessarily the same as $t_1$ and $t_2$. Using a linear interpolation, it is possible to estimate the mutual speed at $t'_1$, $t'_2$, etc., if the speed measurements are updated frequently enough so that the mutual acceleration of the vehicle and the top-observation device is a constant between two instants of measurement - it is often the case if the vehicle is e.g. a wagon of a train. From that interpolation, the following data may be determined: $(x(t'_1),z(t'_1),v(t'_1),t'_1)$, $(x(t'_2),z(t'_2),v(t'_2),t'_2)$, etc. The mutual position, i.e. coordinate y along the axis (OY), may be determined from an instant $t_0$ chosen as the beginning of the time reference (for example a time stamp $t_0$ of the first measurement of the top-observation device), based on a parabolic formula, i.e. the acceleration is constant between two measurements, as follows:

$$y(t'_i)=y(t'_{i-1})+v(t'_{i-1})(t'_i - t'_{i-1})+ \tfrac{1}{2}.(v(t'_i)-v(t'_{i-1})).(t'_i - t'_{i-1}),$$

or

$$y(t'_i)=y(t'_{i-1})+ \tfrac{1}{2}.(v(t'_i)+v(t'_{i-1})).(t'_i - t'_{i-1})$$

In cases where the side-inspection device is a matrix of detectors, a second example method may use image data from the matrix. From a processing of the image data generated during the mutual displacement of the vehicle and the side-inspection device, it is possible to calculate a pace corresponding to a number of pulses of ionizing radiation which are emitted e.g. by the side-inspection device by unit of mutual displacement (e.g. in mm), or inversely a distance (e.g. a number of mm) travelled by pulse. The frequency of the pulses being known, the distance travelled by pulse is equivalent to a mutual speed. The mutual speed being known, the mutual position may be determined as described in the first example above. An example of a method for calculating a pace is described in GB2594449.

In cases where the length of the vehicle is normalised, and assuming that the mutual speed is constant, a third example method may estimate the mutual position by measuring the time lapsed for a beginning and an end of the vehicle to pass in front of a reference, e.g. a photoelectric cell. The time stamps when the beginning and the end of the vehicle pass in front of the reference may be determined. The mutual speed and thus the mutual position may be determined based on the determined time stamps and the known length of the vehicle.

In cases where the length of the vehicle is normalised, and assuming that the mutual speed is constant, a fourth example method may estimate the mutual position by measuring the time lapsed for a beginning and an end of the vehicle to pass in front of the top-observation device, e.g. using the data from the top-observation device. Using the data in the format $(x(t'_1), z(t'_1),t'_1)$, $(x(t'_2), z(t'_2),t'_2)$, etc., output by the top-observation device, and analysing the coordinates x and z, the time stamps when the beginning and the end of the vehicle pass in front of the top-observation device may be determined. The mutual speed and thus the mutual position may be determined based on the determined time stamps and the known length of the vehicle.

It should be understood that other examples than one or more Lidars may be envisaged for the top-observation device 4, such as one or more millimetre-wave scanners. Any top-observation device configured to observe the top surface of the cargo in the open-topped vehicle during the mutual movement of the open-topped vehicle and the top-observation device may be envisaged.

An example for obtaining, at S12, the estimate of the height of the cargo under the top surface of the cargo in the open-topped vehicle is described below.

As illustrated in Figure 4, an estimate of the height $H_R$ of the cargo 3 under the top surface 32 of the cargo in the open-topped vehicle 2 may be obtained from a knowledge of the type of the open-topped vehicle 2. In cases where the type of the open-topped vehicle 2 is normalized, the height $H_R$ corresponding to the floor of the open-topped vehicle 2 over the ground is well-known. The height estimate $H_R$ may be obtained using information from a description of the open-topped vehicle 2. In cases where the type of the open-topped vehicle 2 is not known and/or the type of the open-topped vehicle 2 is not normalized, the height estimate $H_R$ may be obtained using other techniques, such as direct measurement of the height $H_R$ (e.g. using a side-inspection device, an example of which is described in more detail below) and/or by side observation, e.g. by an operator of the system 1.

At S13, the volume estimate (corresponding to the hashed volume in Figure 4) may be determined, based on the profile estimates obtained at S11 and the height estimate obtained at S12.

Examples of methods for further determining, at S2, the estimate of the mass of the cargo in the open-topped vehicle, based on the volume estimate obtained at S2 are described below.

As illustrated in Figure 2, the system 1 may be in communication with a side-inspection device 5, e.g. using wired or wireless connection.

As illustrated in Figure 4, the side-inspection device 5 is configured to inspect the cargo 3 using ionizing radiation 50 during a mutual movement of the open-topped vehicle 2 and the side-inspection device 5, e.g. in the (OY) direction. In some examples the side-inspection device 5 comprises an ionizing radiation scanner 5 (e.g. using X-rays as a non-limiting example), mounted fixed with respect to the ground, the open-topped vehicle 2 being mobile with respect to the ground, e.g. in the (OY) direction. Alternatively, during the mutual movement, in some examples the side-inspection device 5 may be mobile with respect to the ground, e.g. in the (OY) direction, the open-topped vehicle 2 may be fixed with respect to the ground.

In example methods, determining at S2 the mass estimate of the cargo in the open-topped vehicle may further comprise obtaining an estimate of the density (i.e. volumic mass) of the cargo in the open-topped vehicle.

In some examples, obtaining the estimate of the density may comprise the system 1 determining the density estimate using data received from the side-inspection device 5. Alternatively or additionally, obtaining the estimate of the density may comprise the system 1 receiving the density estimate from the side-inspection device 5. In other words, the side-inspection device 5 may be configured to determine the density estimate using side-inspection data.

Alternatively or additionally, in some cases, the type of the cargo 3 may be known: e.g. it may be known that the cargo 3 is iron ore, because the cargo is provided by a regular provider - e.g. a known mining company. In such cases, a reference density (e.g. obtained using information from a description of the cargo 3 by the provider) or a density estimate (e.g. obtained by a measurement using any means other than the side-inspection device 5 and/or an estimation using information from an observation of the cargo 3, e.g. by an operator of the system 1) may also be predetermined. In the cases where the type of the cargo is known, obtaining the estimate of the density may comprise the system 1 assigning at least one of the predetermined reference density or the predetermined density estimate to the density estimate.

Example methods for determining, at S20, the density estimate using data received from the side-inspection device 5 are described below, with reference to Figure 6.

Determining at S20 the density estimate may comprise:

obtaining, at S201, inspection data measured by the side-inspection device, the inspection data being measured after transmission of the ionizing radiation through an upper part of the vehicle, including an upper part of the cargo,

obtaining, at S202, first mass equivalence data associated with the irradiated upper part of the vehicle not including the cargo, the first mass equivalence data being with respect to a reference material, based on the obtained inspection data,

obtaining, at 202, second mass equivalence data associated with the irradiated upper part of the vehicle, including the upper part of the cargo, the second mass equivalence data being with respect to the reference material, based on the obtained inspection data,

obtaining, at S203, third mass equivalence data associated with the irradiated upper part of the cargo, based on the obtained first mass equivalence data and the obtained second mass equivalence data,

obtaining, at S204, one or more estimates of profiles of a top surface of the cargo in the open-topped vehicle, based on the data obtained from the top-observation device;

determining, at S205, the density estimate, based on the obtained third mass equivalence data and the obtained one or more profile estimates.

As illustrated in Figure 7, although some ionizing radiation (e.g. radiation ray 53) may be blocked by a high-density or high-thickness cargo 3, there are zones of the cargo 3 where the ionizing radiation is at least partially transmitted (e.g. radiation ray 51 and radiation ray 52), because the thickness of cargo to cross is null or not great enough to block the radiation, and inspection data measured by the side-inspection device 5 (e.g. by detectors 54 of the side-inspection device 5) may be obtained. As illustrated in Figure 7, radiation ray 51 and radiation ray 52 are not fully absorbed by the cargo 3. As illustrated in Figure 7, the inspection data is measured after transmission of the ionizing radiation (e.g. radiation ray 51 and radiation ray 52) through an upper part of the vehicle, including an upper part 34 of the cargo 3.

Mass equivalence data may be obtained at S202 and S203, based on the inspection data obtained at S201. Mass equivalence data of any given material (such as the material of the cargo, as non-limiting examples), with respect to a reference material, corresponds to a thickness of an object made of the reference material, associated with a same radiation transmission, on detectors 54 of the side-inspection device 5, as a radiation transmission associated with a thickness of an object made of the given material. The mass equivalence is expressed in $g.cm^{-2}$.

As already stated, in some cases, the type of the cargo 3 may be known: e.g. it may be known that the cargo 3 is iron ore (as a non-limiting example), because the cargo is provided by a regular provider - e.g. a known mining company. Alternatively or additionally, the type of the cargo 3 may be estimated, e.g. using information from an observation of the cargo 3, e.g. by an operator of the system 1. The material of the cargo 3 (e.g. iron as a non-limiting example, for the cargo being iron ore) may be chosen as the reference material for the mass equivalence data.

The inspection data for ray 51 corresponds to the irradiated upper part of the vehicle 2 not including the cargo 3 (i.e. inspection data associated with a wall 21 of the vehicle in Figure 7). At S202 first mass equivalence data associated with the inspection data for ray 51 (e.g. the mass equivalence data associated with the wall 21 of the vehicle in Figure 7) may be obtained.

The inspection data for ray 52 corresponds to the irradiated upper part of the vehicle 2, including the upper part of the cargo 3. At S202 second mass equivalence data associated with the inspection data for ray 52 (i.e. the mass equivalence data of the cargo 3 between point A and B plus the mass equivalence data of the wall 21 in Figure 7) may be obtained.

At S203, third mass equivalence data associated with the irradiated upper part of the cargo (i.e. the mass equivalence data of the cargo 3 between point A and B in Figure 7) may be obtained, based on the obtained first mass equivalence data and the obtained second mass equivalence data. In the example of Figure 7, the difference between the obtained second mass equivalence data and the obtained first mass equivalence data corresponds to the third equivalence data of the upper part 34 of the cargo between A and B.

At S204, obtaining the one or more estimates of profiles of the top surface 32 of the cargo 3 in the open-topped vehicle 2, based on the data obtained from the top-observation device has already been explained with reference to Figure 4. As the profile in Figure 7 is known, the position of point B in space is well known. The position of point A is also known, because it corresponds to the inner part of the wall 21 at an angle given by the radiation ray 52. The distance between point A et point B may be determined.

As the mass equivalence of the upper part 34 of the cargo is expressed in $g.cm^{-2}$, dividing the mass equivalence of the upper part 34 of the cargo by the distance AB enables determining the density of the cargo 3.

The density of the cargo 3 may be determined for each mutual position along the axis (OY), for a profile of the top surface 32. The method may thus comprise determining a series of density estimates for a series of locations along the side-inspection direction (e.g. the axis (OY)), and determining the density estimate by averaging the determined series of density estimates for the series of locations along the side-inspection direction. This enables a better precision on the density estimate.

After the density estimate $\rho$ is obtained at S20, determining the mass estimate M at S2, based on the volume estimate V obtained at S2, is as follows;

$$M = V.\ \rho.$$

According to the invention, determining at S2 the mass estimate of the cargo in the open-topped vehicle does not comprise obtaining an estimate of the density of the cargo in the open-topped vehicle.

As illustrated in Figures 7 and 8, according to the invention determining the mass estimate at S2 comprises:

obtaining, at S21, inspection data measured by the side-inspection device, the inspection data being measured after transmission of the ionizing radiation through the upper part of the vehicle, including an upper part 34 of the cargo (as illustrated in Figure 7),

obtaining, at S22, first mass equivalence data associated with the irradiated upper part of the vehicle not including the cargo, the first mass equivalence data being with respect to a reference material, based on the obtained inspection data,

obtaining, at S22, second mass equivalence data associated with the irradiated upper part of the vehicle, including the upper part 34 of the cargo, the second mass equivalence data being with respect to the reference material, based on the obtained inspection data,

obtaining, at S23, third mass equivalence data associated with the irradiated upper part 34 of the cargo, based on the obtained first mass equivalence data and the obtained second mass equivalence data,

obtaining, at S24, one or more estimates of profiles of a top surface of the cargo in the open-topped vehicle, based on the data obtained from the top-observation device,

determining, at S25, the mass of the upper part 34 to the cargo, based on the obtained third mass equivalence data and the obtained one or more estimates of profiles,

determining, at S26, the mass estimate of the cargo, based on the determined mass of the upper part 34 to the cargo and the determined volume estimate for the cargo in the open-topped vehicle.

Steps S21 to S24 of Figure 8 have already been described with reference to steps S201 to 204 of Figure 6.

At S24, and with reference to Figure 7, the distance between point A et point B may be determined for each mutual position along the axis (OY). The method of Figure 8 may thus comprise determining, at S24, a series of distances between respective points A et points B, for a series of locations along the side-inspection direction (e.g. the axis (OY)). As the profile in Figure 7 is known for each mutual position along the axis (OY), the area of the upper part 34 of the cargo located below the top surface 32 and above the segment AB may be determined, for each mutual position along the axis (OY). As the mass equivalence of the upper part 34 of the cargo is expressed in $g.cm^{-2}$, the mass of the upper part 34 of the cargo may be determined for each mutual position along the axis (OY) by multiplication of the mass equivalence data by the determined area. By summing the corresponding mass for all of the series of mutual positions along the side-inspection direction (e.g. the axis (OY)), the mass m of the upper part 34 of the cargo, located below the top surface 32 and above the segment AB, may be determined at S25.

By summing the corresponding areas for all of the series of mutual positions along the side-inspection direction (e.g. the axis (OY)), the volume v of the upper part 34 of the cargo may be determined at S26.

After the mass m and the volume v are obtained at S25 and S26, respectively, determining the mass estimate M at S2, based on the volume estimate V obtained at S2, is as follows;

$$M = m\ V/v.$$

In some examples, comparing at S3 the determined mass estimate M with the known reference mass $M_{ref}$, such as the mass which has been previously declared e.g. to border officials, comprises comparing the determined mass estimate with a predetermined threshold above the known reference mass. The threshold may be determined by an operator of the system 1, to avoid detection of false positives. The threshold may correspond to an estimate of an equivalent ore mass corresponding to a minimum quantity of hidden contraband.

Additionally or alternatively, in cases where determining the estimate of the characteristic of the cargo in the open-topped vehicle comprises determining the estimate of the volume of the cargo in the open-topped vehicle, comparing at S3 the determined volume estimate with the reference characteristic may further comprise determining a reference volume $V_{ref}$ of the cargo.

The reference volume $V_{ref}$ may be determined by dividing the reference mass $M_{ref}$ of the cargo, such as the mass which has been previously declared e.g. to border officials, by the obtained density estimate $\rho$. As already explained, the density estimate may be obtained by using the data from the side-inspection device 5 or by prior knowledge of the type of the cargo 3.

The reference volume $V_{ref}$ may be determined such that:

$$V_{ref} = M_{ref}\ /\ \rho$$

In such examples, comparing at S3 the volume estimate V of the cargo with the determined reference volume $V_{ref}$, may comprise comparing the determined volume estimate with a predetermined threshold above the reference volume $V_{ref}$. The threshold may be determined by an operator of the system 1, to avoid detection of false positives. The threshold may correspond to an estimate of an equivalent cargo volume corresponding to a minimum quantity of hidden contraband.

As illustrated in Figure 1, in some examples, if the determined mass estimate M or the determined volume estimate V is greater than the predetermined threshold above the known reference mass $M_{ref}$ or the reference volume $V_{ref}$, respectively, the method 100 may comprise determining at S3 that the cargo in the open-topped vehicle is not in conformity with the reference characteristic. In that case, as illustrated in Figure 3B, the method 100 of Figure 1 may further comprise determining, at S4, that the cargo 3 in the open-topped vehicle is likely to contain an object 31 of interest.

The object 31 of interest may comprise at least one of contraband, such as cigarettes, or drugs and weapon, such as explosives. The given examples are non-limiting and other objects of interest are envisaged.

The method 100 may further comprise triggering an alarm for the operator of the system 1 when it is determined that the cargo in the open-topped vehicle is likely to contain the object of interest.

**Claims**

1. A computer-implemented method for inspecting cargo in an open-topped vehicle, comprising:

   obtaining data from a top-observation device, the top-observation device being configured to observe a top surface of the cargo in the open-topped vehicle during a mutual movement of the open-topped vehicle and the top-observation device;
   determining an estimate of at least one characteristic of the cargo in the open-topped vehicle, based on the obtained data, wherein the determining of the at least one estimate comprises determining an estimate of a volume of the cargo and a mass estimate of the cargo;
   comparing the determined at least one characteristic estimate with a reference characteristic associated with the cargo in the open-topped vehicle; and
   determining whether the cargo in the open-topped vehicle is in conformity with the reference characteristic, based on the comparing,
   wherein determining the volume estimate comprises:

      obtaining estimates of profiles of the top surface of the cargo in the open-topped vehicle, based on the data obtained from the top-observation device,
      obtaining an estimate of a height of the cargo under the top surface of the cargo in the open-topped vehicle, and
      determining the volume estimate, based on the obtained profile estimates and the obtained height estimate, and

   wherein determining the mass estimate comprises:

      obtaining inspection data measured by a side-inspection device configured to inspect the cargo using ionizing radiation during a mutual movement of the open-topped vehicle and the side-inspection device, the inspection data being measured after transmission of the ionizing radiation through an upper part of the vehicle, including an upper part of the cargo,
      obtaining first mass equivalence data associated with the irradiated upper part of the vehicle not including the cargo, the first mass equivalence data being with respect to a reference material, based on the obtained inspection data,
      obtaining second mass equivalence data associated with the irradiated upper part of the vehicle, including the upper part of the cargo, the second mass equivalence data being with respect to the reference material, based on the obtained inspection data,
      obtaining third mass equivalence data associated with the irradiated upper part of the cargo, based on the obtained first mass equivalence data and the obtained second mass equivalence data,
      determining the mass of the upper part to the cargo, based on the obtained third mass equivalence data and the obtained one or more estimates of the profiles, and
      determining the mass estimate of the cargo, based on the determined mass of the upper part to the cargo and the determined volume estimate for the cargo in the open-topped vehicle.

2. The method of the preceding claim, wherein determining the estimate of the volume of the cargo in the open-topped vehicle comprises at least one of:

   determining the volume estimate using data received from the top-observation device, and
   receiving the volume estimate from the top-observation device.

3. The method of claim 1 or claim 2, wherein comparing the determined at least one characteristic estimate with the reference characteristic comprises:

   comparing the determined mass estimate with a reference mass of the cargo,

the method further comprising:

comparing the determined mass estimate with a predetermined threshold above the reference mass, and
if the determined mass estimate is greater than the predetermined threshold above the reference mass, the method comprising determining that the cargo in the open-topped vehicle is not in conformity with the reference mass, the method further comprising:
determining that the cargo in the open-topped vehicle is likely to contain an object of interest.

4. The method of any of claims 1 to 3, wherein determining the estimate of at least one characteristic of the cargo in the open-topped vehicle further comprises obtaining an estimate of the density of the cargo in the open-topped vehicle.

5. The method of the preceding claim, wherein obtaining the estimate of the density comprises at least one of:

determining the density estimate using data received from the side-inspection device configured to inspect the cargo using ionizing radiation during a mutual movement of the open-topped vehicle and the side-inspection device,
receiving the density estimate from the side-inspection device, and
assigning at least one of a predetermined reference density or a predetermined density estimate to the density estimate.

6. The method of the preceding claim, wherein determining the density estimate using data received from the side-inspection device comprises:
determining the density estimate, based on the obtained third mass equivalence data and the obtained one or more profile estimates, optionally comprising:

determining a series of density estimates for a series of locations along the side-inspection direction, and
determining the density estimate by averaging the determined series of density estimates for the series of locations along the side-inspection direction.

7. The method of any of claims 4 to 6, wherein determining the estimate of the at least one characteristic of the cargo further comprises:

determining the mass estimate M of the cargo, based on the volume estimate V, using the de-

termined density estimate $\rho$, by:

$$M = V \cdot \rho,$$

optionally wherein comparing the determined characteristic estimate with the reference characteristic comprises comparing the determined mass estimate with a reference mass of the cargo, the method further comprising:

comparing the determined mass estimate with a predetermined threshold above the reference mass, and
if the determined mass estimate is greater than the predetermined threshold above the reference mass, the method comprising determining that the cargo in the open-topped vehicle is not in conformity with the reference mass, the method further comprising: determining that the cargo in the open-topped vehicle is likely to contain an object of interest.

8. The method of any of claims 4 to 6, wherein comparing the determined characteristic estimate with the reference characteristic further comprises:

determining a reference volume $V_{ref}$ of the cargo by dividing a reference mass $M_{ref}$ of the cargo by the obtained density estimate $\rho$, such that:

$$V_{ref} = M_{ref} / \rho$$

comparing the volume estimate of the cargo with the determined reference volume $V_{ref}$, comprising comparing the determined volume estimate with a predetermined threshold above the reference volume $V_{ref}$, and
if the determined volume estimate is greater than the predetermined threshold above the reference volume, the method comprising determining that the cargo in the open-topped vehicle is not in conformity with the reference characteristic, the method further comprising:
determining that the cargo in the open-topped vehicle is likely to contain an object of interest.

9. The method of any of claims 3, 7 and 8, further comprising triggering an alarm when it is determined that the cargo in the open-topped vehicle is likely to contain the object of interest.

10. The method of any of claims 3, 7, 8 and 9, wherein the object of interest comprises at least one of contraband, such as cigarettes or drugs, and weapon, such as explosives.

**11.** The method of any of the preceding claims, wherein the top-observation device comprises at least one of one or more Lidar scanners and one or more millimetre-wave scanners,

> the top-observation device being mounted fixed with respect to the ground, the open-topped vehicle being mobile with respect to the ground, or
>
> wherein the side-inspection device comprises an ionizing radiation scanner, mounted fixed with respect to the ground, the open-topped vehicle being mobile with respect to the ground.

**12.** The method of any of the preceding claims, wherein the open-topped vehicle comprises at least one of an open-topped gondola-type wagon or an open-topped truck trailer.

**13.** The method of any of the preceding claims, wherein the cargo in the open-topped vehicle comprises a load of high-density material, such as metal ore.

**14.** The method of any of the preceding claims, further comprising determining one or more mutual positions of the vehicle and the top-observation device along an axis of the mutual movement of the open-topped vehicle and the top-observation device.

**15.** A system comprising:

> a processor; and
> a memory storing instructions which, when executed by the processor, enable the system to perform a method according to any of the preceding claims.

**Patentansprüche**

**1.** Computerimplementiertes Verfahren zur Inspektion von Fracht in einem oben offenen Fahrzeug, Folgendes umfassend:

> Erhalten von Daten von einer Draufsicht-Überwachungsvorrichtung,
> wobei die Draufsicht-Überwachungsvorrichtung dazu konfiguriert ist, während einer gemeinsamen Bewegung des oben offenen Fahrzeugs und der Draufsicht-Überwachungsvorrichtung eine obere Fläche der Fracht in dem oben offenen Fahrzeug zu überwachen;
> Bestimmen einer Schätzung von mindestens einem Merkmal der Fracht in dem oben offenen Fahrzeug, basierend auf den erhaltenen Daten, wobei das Bestimmen der mindestens einen Schätzung das Bestimmen einer Volumenschätzung der Fracht und einer Massenschätzung der Fracht umfasst;
Vergleichen der bestimmten mindestens einen Merkmalsschätzung mit einem Referenzmerkmal, das der Fracht in dem oben offenen Fahrzeug zugeordnet ist; und
Bestimmen, basierend auf dem Vergleichen, ob die Fracht in dem oben offenen Fahrzeug dem Referenzmerkmal entspricht,
wobei das Bestimmen der Volumenschätzung Folgendes umfasst:

> Erhalten von Profilschätzungen der oberen Fläche der Fracht in dem oben offenen Fahrzeug, basierend auf den Daten, die von der Draufsicht-Überwachungsvorrichtung erhalten wurden,
> Erhalten einer Höhenschätzung der Fracht unter der oberen Fläche der Fracht in dem oben offenen Fahrzeug, und
> Bestimmen der Volumenschätzung, basierend auf den erhaltenen Profilschätzungen und der erhaltenen Höhenschätzung, und

wobei das Bestimmen der Massenschätzung Folgendes umfasst:

> Erhalten von Inspektionsdaten, die von einer Seiteninspektionsvorrichtung gemessen werden, die dazu konfiguriert ist, die Fracht unter Verwendung ionisierender Strahlung während einer gemeinsamen Bewegung des oben offenen Fahrzeugs und der Seiteninspektionsvorrichtung zu inspizieren, wobei die Inspektionsdaten nach der Übertragung der ionisierenden Strahlung durch einen oberen Teil des Fahrzeugs, einschließlich eines oberen Teils der Fracht, gemessen werden,
> Erhalten von ersten Massenäquivalenzdaten, die dem bestrahlten oberen Teil des Fahrzeugs zugeordnet sind, der die Fracht nicht einschließt, wobei sich die ersten Massenäquivalenzdaten auf ein Referenzmaterial beziehen, basierend auf den erhaltenen Inspektionsdaten,
> Erhalten von zweiten Massenäquivalenzdaten, die dem bestrahlten oberen Teil des Fahrzeugs, einschließlich des oberen Teils der Fracht, zugeordnet sind, wobei sich die zweiten Massenäquivalenzdaten auf das Referenzmaterial beziehen, basierend auf den erhaltenen Inspektionsdaten,
> Erhalten von dritten Massenäquivalenzdaten, die dem bestrahlten oberen Teil der Fracht zugeordnet sind, basierend auf den erhaltenen ersten Massenäquivalenzdaten und den erhaltenen zweiten Massenäquivalenzdaten,

Bestimmen der Masse des oberen Teils der Fracht, basierend auf den erhaltenen dritten Massenäquivalenzdaten und den erhaltenen einen oder mehreren Profilschätzungen, und

Bestimmen der Massenschätzung der Fracht, basierend auf der bestimmten Masse des oberen Teils der Fracht und der bestimmten Volumenschätzung für die Fracht in dem oben offenen Fahrzeug.

2. Verfahren nach dem vorhergehenden Anspruch, wobei das Bestimmen der Volumenschätzung der Fracht in dem oben offenen Fahrzeug mindestens eines von Folgendem umfasst:

Bestimmen der Volumenschätzung unter Verwendung von Daten, die von der Draufsicht-Überwachungsvorrichtung empfangen wurden, und

Empfangen der Volumenschätzung von der Draufsicht-Überwachungsvorrichtung.

3. Verfahren nach Anspruch 1 oder Anspruch 2, wobei das Vergleichen der bestimmten mindestens einen Merkmalsschätzung mit dem Referenzmerkmal Folgendes umfasst:

Vergleichen der bestimmten Massenschätzung mit einer Referenzmasse der Fracht, wobei das Verfahren ferner Folgendes umfasst:

Vergleichen der bestimmten Massenschätzung mit einem vorbestimmten Schwellenwert über der Referenzmasse, und

falls die bestimmte Massenschätzung größer als der vorbestimmte Schwellenwert über der Referenzmasse ist, umfasst das Verfahren das Bestimmen, dass die Fracht in dem oben offenen Fahrzeug nicht der Referenzmasse entspricht, wobei das Verfahren ferner Folgendes umfasst:

Bestimmen, dass die Fracht in dem oben offenen Fahrzeug wahrscheinlich ein Objekt von Interesse enthält.

4. Verfahren nach einem der Ansprüche 1 bis 3, wobei das Bestimmen der Schätzung von mindestens einem Merkmal der Fracht in dem oben offenen Fahrzeug ferner das Erhalten einer Dichteschätzung der Fracht in dem oben offenen Fahrzeug umfasst.

5. Verfahren nach dem vorhergehenden Anspruch, wobei das Erhalten der Dichteschätzung mindestens eines von Folgendem umfasst:

Bestimmen der Dichteschätzung unter Verwendung von Daten, die von der Seiteninspektionsvorrichtung empfangen werden, die dazu konfiguriert ist, die Fracht unter Verwendung ionisierender Strahlung während einer gemeinsamen Bewegung des oben offenen Fahrzeugs und der Seiteninspektionsvorrichtung zu inspizieren,

Empfangen der Dichteschätzung von der Seiteninspektionsvorrichtung und

Zuweisen von mindestens einer von einer vorbestimmten Referenzdichte oder einer vorbestimmten Dichteschätzung zu der Dichteschätzung.

6. Verfahren nach dem vorhergehenden Anspruch, wobei das Bestimmen der Dichteschätzung unter Verwendung von Daten, die von der Seiteninspektionsvorrichtung empfangen werden, Folgendes umfasst:

Bestimmen der Dichteschätzung basierend auf den erhaltenen dritten Massenäquivalenzdaten und den erhaltenen einen oder mehreren Profilschätzungen, optional umfassend:

Bestimmen einer Reihe von Dichteschätzungen für eine Reihe von Standorten entlang der Seiteninspektionsrichtung und

Bestimmen der Dichteschätzung durch Mitteln der bestimmten Reihe von Dichteschätzungen für die Reihe von Standorten entlang der Seiteninspektionsrichtung.

7. Verfahren nach einem der Ansprüche 4 bis 6, wobei das Bestimmen der mindestens einen Merkmalsschätzung der der Fracht ferner Folgendes umfasst:

Bestimmen der Massenschätzung M der Fracht, basierend auf der Volumenschätzung V, unter Verwendung der bestimmten Dichteschätzung $\rho$, durch:

$$M = V \cdot \rho,$$

wobei optional das Vergleichen der bestimmten Merkmalsschätzung mit dem Referenzmerkmal das Vergleichen der bestimmten Massenschätzung mit einer Referenzmasse der Fracht umfasst, wobei das Verfahren ferner Folgendes umfasst:

Vergleichen der bestimmten Massenschätzung mit einem vorbestimmten Schwellenwert über der Referenzmasse und

falls die bestimmte Massenschätzung größer als der vorbestimmte Schwellenwert über der Referenzmasse ist, umfasst das Verfahren das Bestimmen, dass die Fracht in dem oben offenen Fahrzeug nicht der Referenzmasse entspricht, wobei das Verfahren ferner Folgendes umfasst: Bestimmen, dass die Fracht in dem oben offenen Fahrzeug wahrscheinlich ein Objekt von Interesse enthält.

8. Verfahren nach einem der Ansprüche 4 bis 6, wobei das Vergleichen der bestimmten Merkmalsschätzung mit dem Referenzmerkmal ferner Folgendes umfasst:

Bestimmen eines Referenzvolumens $V_{ref}$ der Fracht durch Teilen einer Referenzmasse $M_{ref}$ der Fracht durch die erhaltene Dichteschätzung $\rho$, sodass:

$$V_{ref} = M_{ref}/\rho$$

Vergleichen der Volumenschätzung der Fracht mit dem bestimmten Referenzvolumen $V_{ref}$, umfassend das Vergleichen der bestimmten Volumenschätzung mit einem vorbestimmten Schwellenwert über dem Referenzvolumen $V_{ref}$, und

falls die bestimmte Volumenschätzung größer als der vorbestimmte Schwellenwert über dem Referenzvolumen ist, umfasst das Verfahren das Bestimmen, dass die Fracht in dem oben offenen Fahrzeug nicht dem Referenzmerkmal entspricht, wobei das Verfahren ferner Folgendes umfasst:

Bestimmen, dass die Fracht in dem oben offenen Fahrzeug wahrscheinlich ein Objekt von Interesse enthält.

9. Verfahren nach einem der Ansprüche 3, 7 und 8, ferner umfassend das Auslösen eines Alarms, wenn bestimmt wird, dass die Fracht in dem oben offenen Fahrzeug wahrscheinlich das Objekt von Interesse enthält.

10. Verfahren nach einem der Ansprüche 3, 7, 8 und 9, wobei das Objekt von Interesse mindestens eines von einer Schmuggelware, wie z. B. Zigaretten oder Drogen, und einer Waffe, wie z. B. Sprengstoff, umfasst.

11. Verfahren nach einem der vorhergehenden Ansprüche, wobei die Draufsicht-Überwachungsvorrichtung mindestens einen von einem oder mehreren Lidar-Scannern und einem oder mehreren Millimeterwellen-Scannern umfasst,

die Draufsicht-Überwachungsvorrichtung in Bezug auf den Boden fest montiert ist, wobei das oben offene Fahrzeug in Bezug auf den Boden beweglich ist, oder
wobei die Seiteninspektionsvorrichtung einen Scanner für ionisierende Strahlung umfasst, der in Bezug auf den Boden fest montiert ist, wobei das oben offene Fahrzeug in Bezug auf den Boden beweglich ist.

12. Verfahren nach einem der vorhergehenden Ansprüche, wobei das oben offene Fahrzeug mindestens einen oben offenen Güterwagen-artigen Waggon oder einen oben offenen LKW-Anhänger umfasst.

13. Verfahren nach einem der vorhergehenden Ansprüche, wobei die Fracht in dem oben offenen Fahrzeug eine Fracht aus einem Material mit hoher Dichte, wie z. B. Metallerz, umfasst.

14. Verfahren nach einem der vorhergehenden Ansprüche, ferner umfassend das Bestimmen einer oder mehrerer gemeinsamer Positionen des Fahrzeugs und der Draufsicht-Überwachungsvorrichtung entlang einer Achse der gemeinsamen Bewegung des oben offenen Fahrzeugs und der Draufsicht-Überwachungsvorrichtung.

15. System, umfassend:

einen Prozessor; und
einen Arbeitsspeicher, der Anweisungen speichert, die, wenn sie durch den Prozessor ausgeführt werden, dem System ermöglichen, ein Verfahren nach einem der vorhergehenden Ansprüche durchzuführen.

**Revendications**

1. Procédé mis en œuvre par ordinateur permettant d'inspecter une cargaison dans un véhicule à toit ouvert, consistant à :

obtenir des données auprès d'un dispositif d'observation supérieure,
le dispositif d'observation supérieure étant configuré pour observer une surface supérieure de la cargaison dans le véhicule à toit ouvert pendant un déplacement mutuel du véhicule à toit ouvert et du dispositif d'observation supérieure ;
déterminer une estimation d'au moins une caractéristique de la cargaison dans le véhicule à toit ouvert, sur la base des données obtenues, la détermination de l'au moins une estimation consistant à déterminer une estimation d'un volume de la cargaison et une estimation de masse de la cargaison ;
comparer l'au moins une estimation de caractéristique déterminée à une caractéristique de référence associée à la cargaison dans le véhicule à toit ouvert ; et
déterminer si la cargaison dans le véhicule à toit ouvert est conforme à la caractéristique de référence, sur la base de la comparaison,
la détermination de l'estimation de volume consistant à :

obtenir des estimations de profils de la surface supérieure de la cargaison dans le véhicule à toit ouvert, sur la base des données obtenues auprès du dispositif d'observation supérieure,
obtenir une estimation d'une hauteur de la cargaison sous la surface supérieure de la cargaison dans le véhicule à toit ouvert, et déterminer l'estimation de volume, sur la base des estimations de profil obtenues et de l'estimation de hauteur obtenue, et

la détermination de l'estimation de masse consistant à :

obtenir des données d'inspection mesurées par un dispositif d'inspection latérale configuré pour inspecter la cargaison au moyen d'un rayonnement ionisant pendant un déplacement mutuel du véhicule à toit ouvert et du dispositif d'inspection latérale, les données d'inspection étant mesurées après émission du rayonnement ionisant à travers une partie supérieure du véhicule, incluant une partie supérieure de la cargaison,
obtenir des premières données d'équivalence de masse associées à la partie supérieure irradiée du véhicule n'incluant pas la cargaison, les premières données d'équivalence de masse étant par rapport à un matériau de référence, sur la base des données d'inspection obtenues,
obtenir des deuxièmes données d'équivalence de masse associées à la partie supérieure irradiée du véhicule, incluant la partie supérieure de la cargaison, les deuxièmes données d'équivalence de masse étant par rapport au matériau de référence, sur la base des données d'inspection obtenues,
obtenir des troisièmes données d'équivalence de masse associées à la partie supérieure irradiée de la cargaison, sur la base des premières données d'équivalence de masse obtenues et des deuxièmes données d'équivalence de masse obtenues,
déterminer la masse de la partie supérieure de la cargaison, sur la base des troisièmes données d'équivalence de masse obtenues et de la ou des estimations obtenues des profils, et
déterminer l'estimation de masse de la cargaison, sur la base de la masse déterminée de la partie supérieure de la cargaison et de l'estimation de volume déterminée pour la cargaison dans le véhicule à toit ouvert.

2. Procédé selon la revendication précédente, la détermination de l'estimation du volume de la cargaison dans le véhicule à toit ouvert comprenant au moins l'une des étapes suivantes consistant à :

déterminer l'estimation de volume au moyen de données reçues en provenance du dispositif d'observation supérieure, et
recevoir l'estimation de volume en provenance du dispositif d'observation supérieure.

3. Procédé selon la revendication 1 ou la revendication 2, la comparaison de l'au moins une estimation de caractéristique déterminée à la caractéristique de référence consistant à :
comparer l'estimation de masse déterminée à une masse de référence de la cargaison, le procédé consistant en outre à :

comparer l'estimation de masse déterminée à un seuil prédéterminé supérieur à la masse de référence, et
si l'estimation de masse déterminée est supérieure au seuil prédéterminé supérieur à la masse de référence, le procédé consistant à déterminer que la cargaison dans le véhicule à toit ouvert n'est pas conforme à la masse de référence, le procédé consistant en outre à :
déterminer que la cargaison dans le véhicule à toit ouvert est susceptible de contenir un objet d'intérêt.

4. Procédé selon l'une quelconque des revendications 1 à 3, la détermination de l'estimation d'au moins une caractéristique de la cargaison dans le véhicule à toit ouvert consistant en outre à obtenir une estimation de la masse volumique de la cargaison dans le véhicule à toit ouvert.

5. Procédé selon la revendication précédente, l'obtention de l'estimation de la masse volumique comprenant au moins l'une des étapes suivantes consistant à :

déterminer l'estimation de masse volumique au moyen de données reçues en provenance du dispositif d'inspection latérale configuré pour inspecter la cargaison au moyen d'un rayonnement ionisant pendant un déplacement mutuel du véhicule à toit ouvert et du dispositif d'inspection latérale,
recevoir l'estimation de masse volumique en provenance du dispositif d'inspection latérale, et
attribuer une masse volumique de référence prédéterminée et/ou une estimation de masse volumique prédéterminée à l'estimation de masse volumique.

6.  Procédé selon la revendication précédente, la détermination de l'estimation de masse volumique au moyen de données reçues en provenance du dispositif d'inspection latérale consistant à :
    déterminer l'estimation de masse volumique, sur la base des troisièmes données d'équivalence de masse obtenues et de la ou des estimations de profil obtenues, le procédé consistant éventuellement à :

    déterminer une série d'estimations de masse volumique pour une série d'emplacements le long de la direction d'inspection latérale, et déterminer l'estimation de masse volumique en calculant la moyenne de la série déterminée d'estimations de masse volumique pour la série d'emplacements le long de la direction d'inspection latérale.

7.  Procédé selon l'une quelconque des revendications 4 à 6, la détermination de l'estimation de l'au moins une caractéristique de la cargaison consistant en outre à :

    déterminer l'estimation de masse M de la cargaison, sur la base de l'estimation de volume V, au moyen de l'estimation de masse volumique déterminée $\rho$, à l'aide de l'équation :

    $$M = V . \rho,$$

    éventuellement, la comparaison de l'estimation de caractéristique déterminée à la caractéristique de référence consistant à comparer l'estimation de masse déterminée à une masse de référence de la cargaison, le procédé consistant en outre à :

    comparer l'estimation de masse déterminée à un seuil prédéterminé supérieur à la masse de référence, et
    si l'estimation de masse déterminée est supérieure au seuil prédéterminé supérieur à la masse de référence, le procédé consistant à déterminer que la cargaison dans le véhicule à toit ouvert n'est pas conforme à la masse de référence, le procédé consistant en outre à : déterminer que la cargaison dans le véhicule à toit ouvert est susceptible de contenir un objet d'intérêt.

8.  Procédé selon l'une quelconque des revendications 4 à 6, la comparaison de l'estimation de caractéristique déterminée à la caractéristique de référence consistant en outre à :

déterminer un volume de référence $V_{réf}$ de la cargaison en divisant une masse de référence $M_{réf}$ de la cargaison par l'estimation de masse volumique obtenue $\rho$, de telle sorte que :

$$V_{réf} = M_{réf} / \rho$$

comparer l'estimation de volume de la cargaison au volume de référence déterminé $V_{réf}$, ce qui consiste à comparer l'estimation de volume déterminée à un seuil prédéterminé supérieur au volume de référence $V_{réf}$, et
si l'estimation de volume déterminée est supérieure au seuil prédéterminé supérieur au volume de référence, le procédé consistant à déterminer que la cargaison dans le véhicule à toit ouvert n'est pas conforme à la caractéristique de référence, le procédé consistant en outre à : déterminer que la cargaison dans le véhicule à toit ouvert est susceptible de contenir un objet d'intérêt.

9.  Procédé selon l'une quelconque des revendications 3, 7 et 8, consistant en outre à déclencher une alarme lorsqu'il est déterminé que la cargaison dans le véhicule à toit ouvert est susceptible de contenir l'objet d'intérêt.

10. Procédé selon l'une quelconque des revendications 3, 7, 8 et 9, l'objet d'intérêt comprenant des marchandises de contrebande, telles que des cigarettes ou des drogues, et/ou des armes, telles que des explosifs.

11. Procédé selon l'une quelconque des revendications précédentes, le dispositif d'observation supérieure comprenant un ou plusieurs scanners Lidar et/ou un ou plusieurs scanners à ondes millimétriques,

    le dispositif d'observation supérieure étant monté fixe par rapport au sol, le véhicule à toit ouvert étant mobile par rapport au sol, ou
    le dispositif d'inspection latérale comprenant un scanner à rayonnement ionisant, monté fixe par rapport au sol, le véhicule à toit ouvert étant mobile par rapport au sol.

12. Procédé selon l'une quelconque des revendications précédentes, le véhicule à toit ouvert comprenant un wagon de type tombereau à toit ouvert et/ou une remorque de camion à toit ouvert.

13. Procédé selon l'une quelconque des revendications précédentes, la cargaison dans le véhicule à toit ouvert comprenant une charge de matériau à haute masse volumique, tel que du minerai métallique.

14. Procédé selon l'une quelconque des revendications précédentes, consistant en outre à déterminer une ou plusieurs positions mutuelles du véhicule et du dispositif d'observation supérieure le long d'un axe du déplacement mutuel du véhicule à toit ouvert et du dispositif d'observation supérieure.

15. Système comprenant :

un processeur ; et
une mémoire stockant des instructions qui, lorsqu'elles sont exécutées par le processeur, permettent au système de réaliser un procédé selon l'une quelconque des revendications précédentes.

100

S1 — Obtain data

S2 — Determine characteristic estimate

S3 — Compare

S4 — Likely to contain object

Fig. 1

1

10

11

4

5

Fig. 2

Fig. 3A

Fig. 3B

Fig. 4

S2

S11 — Obtaining profiles estimates

S12 — Obtaining height estimates

S13 — Determining volume estimate

Fig. 5

S20

S201 — Obtaining inspection data

S202 — Obtaining 1st and 2nd ME data

S203 — Obtaining 3rd ME data

S204 — Obtaining profile estimate

S205 — Determining density estimate

Fig. 6

Fig. 7

S2

S21 — Obtaining inspection data

S22 — Obtaining 1st and 2nd ME data

S23 — Obtaining 3rd ME data

S24 — Obtaining profile estimates

S25 — Determining mass estimate of upper part

S26 — Determining mass estimate

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 2013237637
- CN 111336917
- US 2006145079 A
- US 2017357026 A
- WO 2019216833 A
- GB 2594449 A